# EUROPEAN PATENT APPLICATION

(11) **EP 4 813 564 A1**
(43) Date of publication of application: **30.09.2026**
(21) Application number: 26168467.4
(22) Date of filing: 27.03.2026
(51) Int. Cl.: B23Q 1/03, B27M 1/08

(54) **MACHINE FOR MACHINING A PART AND METHOD FOR CONFIGURING A MACHINE FOR MACHINING A PART**

(30) Priority: 27.03.2025 IT 202500006453
(71) Applicant: SCM Group S.p.A., 47921 Rimini (RN) (IT)
(72) Inventor: VANNUCCI, Carlo, 47921 Rimini (RN) (IT); BERTUCCIOLI, Alessandro, 47921 Rimini (RN) (IT); VILLA, Matteo, 47921 Rimini (RN) (IT); FIORENTINI, Adriano, 47921 Rimini (RN) (IT)
(74) Representative: Gallo, Gianluca

(57) **Abstract**

Described is a machine (M) for machining a part, in particular a wooden part or the like, comprising a work table (100), a machining unit (200), movable relative to the work table (100) and configured to perform at least one machining process on the part. The machine (M) also comprises at least one hold-down device (300) configured to be coupled to, and uncoupled from, the work table (100) and to support and hold in place the part. The machine (M) further comprises a detection device (400) configured to detect information relative to the at least one hold-down device (300) when coupled to the work table (100) and to send the information to a control unit (500). The machine (M) further comprises a control unit (500) configured to receive and process the information so as to associate it with at least one identifying property, among a plurality of identifying properties pre-stored in the control unit (500), corresponding to the at least one hold-down device (300) coupled to the work table (100).

## Description

The present invention relates to a machine for machining a part, in particular a wooden part or similar materials such as, for example, plastic, metal, composite materials and a method for configuring a machine, in particular, a machine for machining a part, more specifically, a wooden part or the like. In the sector of machines for machining a wooden part, computer numerical control (CNC) machines, typically called machining centres (MC), are known for the machining of wooden panels and/or parts made of solid wood, or the like. Reference will be made below generically to parts to be machined, or parts, meaning both panels and solid parts.

As is well known, an MC for machining a part may comprise one or more hold-down devices such as, for example, suction cups or clamps, which have the aim of supporting and holding in place respectively a panel or a solid part to be machined.

The suction cups are typically used in the machining of panels, that is, of elements having two dimensions (length and width) which are predominant relative to a third dimension (thickness). The holding in place of the panel on one or more suction cups is achieved by generating a negative pressure between the suction cups and the panel to be held in place. This negative pressure creates a holding force.

In the operations for machining solid wood, for example wooden blocks, that is, oblong elements with a rectangular section, one or more grippers, or clamps, are typically used to support and hold in place the part to be machined. The solid part is held in place by means of two jaws that tighten around the part.

Usually, the hold-down devices are coupled, in a fixed or removable manner, to a work table that defines a work area oriented according to a work surface. The work surface is typically parallel to the supporting surface of the MC and may extend, for example, along a longitudinal axis and a transversal axis perpendicular to the longitudinal axis.

The work table of the MC may comprise a plurality of bars (the so-called bar work surface, or simply "bar surface"), which may extend, for example, along the transversal axis. The bars may also be located side by side. Further, the bars may be located parallel to each other. In particular, the bars may be movable, either manually or automatically, along the longitudinal axis. Each bar of the bar surface may comprise a plurality of hold-down devices, in particular, a plurality of suction cups and/or clamps, for supporting and holding in place the part to be machined.

The hold-down devices may be coupled to each bar in a removable manner. Further, the hold-down devices may be movable, relative to the bar to which they are coupled, both manually and automatically, along the transversal axis and/or along a vertical axis perpendicular to the work surface.

By the movement of the bars along the longitudinal axis and the movement of the hold-down devices along the transversal axis, the hold-down devices may be located in the work area so as to adapt to the dimensions of one or more panels to be machined.

Typically, the MCs also comprise a machining unit configured to support and move a machine tool on the work area. In particular, the machining unit may comprise a spindle to which the machining tool may be coupled, for example, in a removable manner.

The work surface may be set up by an operator with different hold-down devices, in particular when the hold-down devices may be coupled to the work surface in a removable manner. This set-up must take into account both the correct support and holding in place of the part to be machined, and the fact that, during the machining of the part, care should be taken to prevent that the machining unit impacts on, or is prevented from moving by, one or more hold-down devices that support and hold in place the part. In addition, some hold-down devices may be located on the work surface in different configurations such as, for example, different orientations and/or different operating configurations (raised or lowered suction cups, raised or lowered clamps, etc.). The hold-down devices may also be located on the work surface in different positions.

In order to correctly set up a work surface for a predetermined machining process on a part, the MC may, for example, display on a screen a set-up configuration of the work surface, indicating, for example, the number, the type, the operating configuration and/or the position of each hold-down device to be located on the work surface.

However, through this procedure, it is not possible to know if the operator has set up the work surface correctly.

Some prior art procedures require the operator to scan a code on the hold-down device before it is coupled to the work surface, in order to know in advance the type of hold-down device that will be mounted on the work surface.

However, even this procedure does not guarantee that the operator will not make mistakes, for example, in the orientation of the hold-down device or forget to mount the hold-down device on the work surface after it has been scanned.

Further, this procedure does not allow a knowledge of the number of hold-down devices, the type of hold-down devices, the configuration of the hold-down devices and/or the position of the hold-down devices with which the operator has set up the work surface, so as, for example, to be able to verify the correct set-up of the work surface carried out by the operator.

The technical purpose of the present invention is thus to provide a machine for machining a part and a method for configuring a machine for machining a part which are able to overcome the drawbacks arising from the prior art. The aim of the present invention is thus to provide a machine for machining a part that enables one to reliably know the actual set-up of the work surface and to verify the correct set-up of the work surface.

A further aim of the present invention is to provide a method for configuring a machine for machining a part that is efficient and effective in determining the correct set-up of the work surface.

The technical purpose and the aims specified are substantially achieved by a machine for machining a part and by a method for configuring a machine for machining a part comprising the technical features set out in one or more of the accompanying claims. The dependent claims correspond to possible embodiments of the invention.

In particular, the technical purpose indicated and the aims specified are achieved by a machine for machining a part, in particular a wooden part or the like, according to the present invention.

The machine comprises a work table and a machining unit movable relative to the work table and configured to perform at least one machining process on the part.

Preferably, a tool configured to perform the machining on the part is mounted on the machining unit.

The machine also comprises at least one hold-down device configured to be coupled to, and uncoupled from, the work table and to support and hold in place the part.

By way of a non-limiting example, the at least one hold-down device may be selected from: a suction cup, a clamp, a jaw or an abutment element. Preferably, the machine comprises a plurality of hold-down devices that may be reversibly coupled to the work table.

The machine further comprises a detection device configured to detect information relative to at least one hold-down device when coupled to the work table and to send this information to a control unit.

The machine further comprises a control unit configured to receive and process the information so as to associate the information with at least one identifying property, among a plurality of identifying properties pre-stored in the control unit, corresponding to at least one hold-down device coupled to the work table.

In other words, the control unit ensures that the information received is processed and associated with at least one identifying property of the at least one hold-down device coupled to the work table.

By way of a non-limiting example, the identifying properties comprise at least one quality property and/or at least one dimensional property and/or at least one property which identifies an orientation in space of the at least one hold-down device and/or at least one property which identifies spatial position and/or a property which identifies an operating configuration of the at least one hold-down device.

The term "quality property" refers to a type of hold-down device, for example clamps, suction cups and the like.

The term "property which identifies an orientation in space" refers to the manner in which the hold-down device is oriented in space when coupled to the work surface.

The term "property identifying an operating configuration" means, for example, a closed/open state of a clamp and/or a raised/lowered state of the hold-down device in general and/or on/off as regards the suction air of a suction cup.

In use, the control unit receives from the detection device information relative to the at least one hold-down device and processes this information. In this situation, the control unit associates the information with at least one identifying property, among the plurality of identifying properties pre-stored in the control unit, corresponding to the at least one hold-down device coupled to the work table.

For example, the control unit could associate the information with a property identifying the type of hold-down device coupled to the work table.

According to another example, the control unit could associate the information not only with a property identifying the type but also with a property identifying the dimensions of the hold-down device coupled to the work table.

In doing so, each hold-down device coupled to the work table is correctly identified by the control unit and therefore by the machine.

Preferably, the control unit associates the information with a group of identifying properties corresponding to at least one hold-down device coupled to the work table so as to uniquely identify the hold-down device. In particular, the association of the information with a group of identifying properties makes it possible to know for each hold-down device associated with the work table the type of hold-down device (suction cup, clamp, etc.), its dimensions, its orientation in space, its spatial position on the work table, its operating configuration and any other identifying properties.

Preferably, the detection device is a contactless detector.

Preferably, the detection device is an optical vision device, for example a LiDAR, a video camera or a laser.

According to one embodiment, the at least one hold-down device comprises at least one distinctive element representing the information relative to the at least one hold-down device when coupled to the work table. The at least one distinctive element is applied to an outside wall of the at least one hold-down device so as to be detectable by the detection device.

For example, the at least one hold-down device could comprise a distinctive element defined by a sticker applied to an outside wall of the hold-down device and having a shape and/or a colour and/or a pattern determined so that, at the time of detection by the detection device, the information regarding the shape and/or the colour and/or the pattern of the distinctive element is detected and sent to the control unit that associates the information with one or more identifying properties. For example, the control unit could associate the shape of the distinctive element with a property identifying the type of the hold-down device and/or could associate the colour of the distinctive element with a property identifying the dimensions of the hold-down device and/or could associate the pattern of the distinctive element with a property identifying the spatial position of the distinctive element.

According to a further embodiment, the at least one hold-down device comprises at least one distinctive element defined by a portion of the at least one hold-down device and representing the information relative to the at least one hold-down device when coupled to the work table.

In this situation, by way of a non-limiting example, the distinctive element could be defined by a coloured seal of the hold-down device. In doing so, the control unit could associate the colour of the distinctive element, that is, of the seal, with a property identifying the type of the hold-down device and/or could associate the colour of the distinctive element with a property identifying the dimensions of the hold-down device.

Preferably, the at least one distinctive element is defined by: a coloured element; and/or an element having a predetermined geometrical shape; and/or an element having a predetermined pattern; and/or a QR code.

Preferably, the detection device is coupled to the machining unit so as to be movable simultaneously with the machining unit. This aspect is particularly advantageous when the detection device is an optical device since, in use, once the hold-down device is mounted on the work table, the machining unit is moved towards the hold-down device so that the detection device may detect information relative to the hold-down device.

Alternatively, the detection device is mounted on a movable support of the machine, that is, it is, for example, mounted on a movable arm capable of moving the detection device relative to the work table. Also in this case, this aspect is particularly advantageous when the detection device is an optical device since, during use, once the hold-down device is mounted on the work table, the movable support is moved towards the hold-down device so that the detection device may detect information relative to that hold-down device.

Alternatively, the detection device is associated with the machine in a fixed manner, that is, it does not change its position relative to the work table. Alternatively, the detection device defines a unit that may, as required, be taken from or released from a store of units by the machining unit.

According to a further possible embodiment of the invention, the detection device comprises an RFID reader and the at least one hold-down device comprises at least one tag detectable by the detection device. The tag is associated with an identification code representing the information detected by the detection device.

In this situation, when the RFID reader detects the tag, the RFID reader reads the identification code stored in the tag and sends that code to the control unit which associates the tag with at least one identifying property, among a plurality of identifying properties pre-stored in the control unit, corresponding to the at least one hold-down device coupled to the work table.

Preferably, the control unit associates the tag with a group of identifying properties, among a plurality of identifying properties pre-stored in the control unit, corresponding to the at least one hold-down device coupled to the work table. In doing so, by reading the tag, it is possible to identify, for example, the type, dimensions and the spatial position of the hold-down device coupled to the work table.

Preferably, the work table extends along a longitudinal axis and comprises a plurality of bars extending along an axis transversal to the longitudinal axis. In this situation, the machine comprises, for each bar, at least one carriage slidable along the respective bar.

Preferably, the detection device may be selectively connectable to one of the above-mentioned carriages so as to be movable simultaneously with the carriage towards the at least one hold-down device to read the tag.

In use, for example, a first hold-down device and a second hold-down device are coupled to respective bars of the work table. In this situation, the detection device is coupled to the carriage slidable on the bar to which the first hold-down device is coupled so as to be moved towards the first hold-down device and carry out the reading of the tag. Subsequently, the detection device is coupled to the carriage slidable on the bar to which the second hold-down device is coupled so as to be moved towards the second hold-down device and carry out the reading of the tag.

Alternatively, for each carriage of each bar, the machine comprises a respective detection device. In this situation, if, for example, a first hold-down device and a second hold-down device are coupled to respective bars of the work table, a first and a second detection device are coupled to respective carriages slidable on the above-mentioned bars.

Preferably, the carriage to which the detection device is coupled is configured to engage the at least one hold-down device and to move the at least one hold-down device along the respective bar.

In other words, the hold-down device is mounted on the carriage having the detection device so that the latter may carry out the detection. After the detection, or simultaneously with it, the carriage (and thus the hold-down device mounted on it) is slid along the respective bar so as to place the hold-down device in a predetermined position along the bar itself. Once the hold-down device is positioned, the carriage is uncoupled from the hold-down device.

According to a possible embodiment, the detection device is a visual capturing device configured for capturing an image. The image represents information relative to the at least one hold-down device when coupled to the work table. In this situation, the control unit is configured to process the image via an artificial intelligence (AI) engine. The Al engine is trained to associate information relative to a hold-down device with identifying properties, so as to associate the information with at least one identifying property, among a plurality of identifying properties pre-stored in the control unit, corresponding to the at least one hold-down device coupled to the work table.

According to the above-mentioned embodiments, the Al engine is trained by subjecting the artificial intelligence engine to a plurality of images showing work surfaces set up differently, that is, containing one or more hold-down devices of different type, shape, size, etc.

The technical purpose indicated and the aims specified are also achieved by a method for configuring a machine for machining a part, in particular a wooden part or the like, according to the present invention.

Preferably, the method is accomplished by means of a machine according to the present invention.

The method comprises a step of coupling at least one hold-down device, configured to support and hold in place the part on a work table of the machine.

The method comprises a step of detecting, by means of a detection device, information relative to the at least one hold-down device when coupled to the work table and a step of sending, by means of the detection device, the information to a control unit of the machine.

The method comprises a step of processing, by means of the control unit, the information so as to associate the information with at least one identifying property, among a plurality of identifying properties pre-stored in the control unit, corresponding to the at least one hold-down device coupled to the work table.

According to an embodiment of the method, the detection device is coupled to the machining unit so as to be movable simultaneously with the machining unit. In this situation, the method comprises, prior to the step of detecting, a step of moving the machining unit so as to move the detection device closer to the at least one hold-down device coupled to the work table. This aspect is advantageous when the detection device is an optical vision device.

According to a further embodiment of the method, the detection device is an RFID reader and the at least one hold-down device comprises a tag detectable by the detection device. The tag is associated with an identification code representing the information detected by the detection device. In this embodiment, the step of detecting is accomplished by reading the tag. In doing so, the identification code is read and sent to the control unit which associates it with at least one identifying property among the identifying properties of the plurality pre-stored in the control unit so as to identify the at least one hold-down device coupled to the work table.

According to further embodiments of the method, the detection device is a visual capturing device. In this situation, the step of detecting is accomplished by capturing an image representing the above-mentioned information relative to at least one hold-down device when coupled to the work table. According to these embodiments, the step of processing is accomplished by processing the image via an artificial intelligence (AI) engine.

Preferably, the method, according to the above-mentioned embodiment, comprises a step of training the artificial intelligence engine to associate information relative to a hold-down device with identifying properties.

Further features and advantages of the invention are more apparent in the non-limiting description which follows of a non-exclusive embodiment of a machine for machining a part and a method for configuring a machine for machining a part.

The description is set out below with reference to the accompanying drawings which are provided solely for purposes of illustration without restricting the scope of the invention and in which:
- Figure 1 shows a perspective view of a machine according to the present invention;
- Figure 2A shows a perspective view of an embodiment of a hold-down device provided with a distinctive element;
- Figure 2B shows a perspective view of an embodiment of a hold-down device provided with two distinctive elements;
- Figures 3 shows a perspective view of an embodiment of a detection device forming part of the machine according to the present invention.

With reference to the accompanying drawings, "M" denotes a machine for machining a part, in particular a wooden part or the like.

The machine "M" comprises a work table 100.

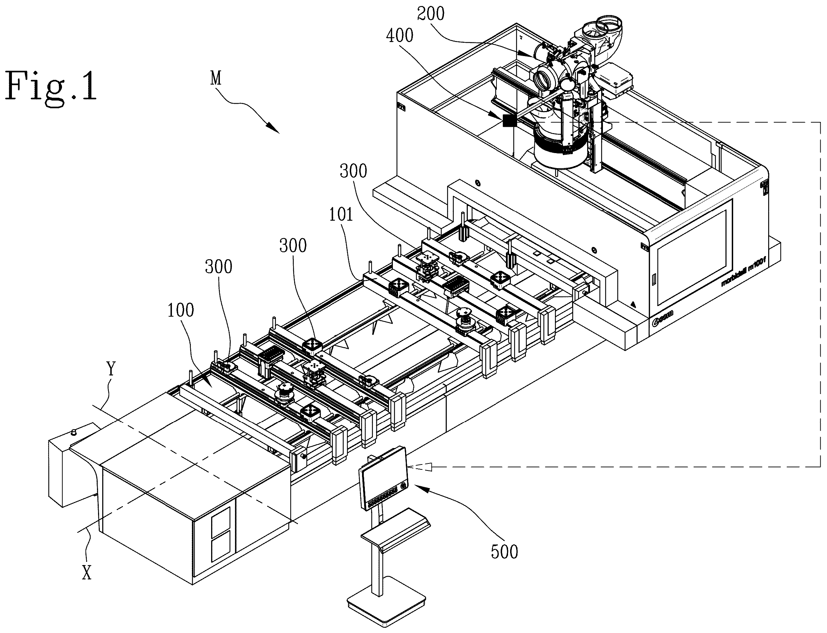

In the embodiment shown in Figure 1, the work table 100 extends along a longitudinal axis "X" and comprises a plurality of bars 101 extending along an axis "Y" transversal to the longitudinal axis "X".

Alternatively, the work table 100 could be defined by a single continuous plane extending along the longitudinal axis "X".

The machine "M" also comprises a machining unit 200 movable relative to the work table 100 and configured to perform at least one machining process on the part.

The machine "M" comprises at least one hold-down device 300 configured to be coupled to, and uncoupled from, the work table 100 and to support and hold in place the part.

Preferably, the machine "M" comprises a plurality of hold-down devices 300. The at least one hold-down device 300 may be selected, for example, from suction cups, clamps, mechanical stops, jaws and the like.

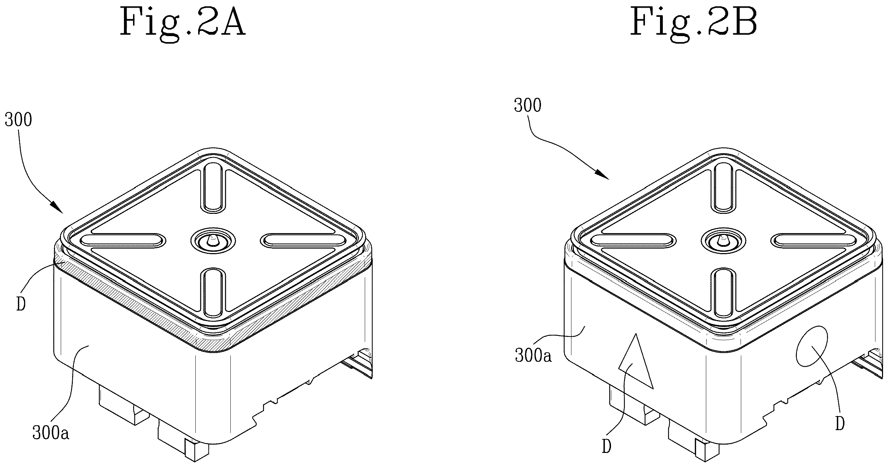

The embodiments of Figures 2A-3 shown, by way of a non-limiting example, a hold-down device 300 defined by a suction cup.

The machine "M" further comprises a detection device 400 configured to detect information relative to the at least one hold-down device 300 when coupled to the work table 100 and to send this information to a control unit 500.

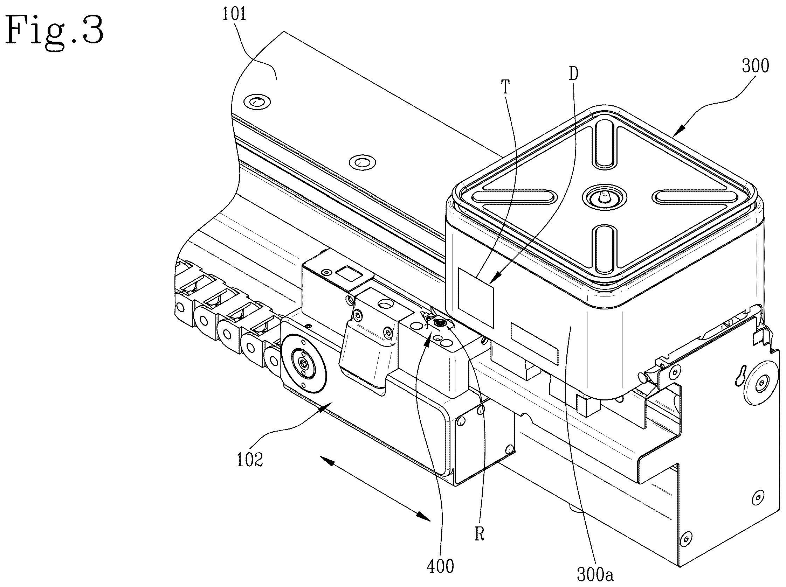

In the embodiment shown in Figures 1 and 3, the detection device 400 is a contactless detector.

In the embodiment shown in Figure 1, the detection device 400 is an optical vision device. For example, the detection device 400 could be a LiDAR device, a video camera, a laser beam.

In the embodiment shown in Figure 3, the detection device 400 is an RFID reader, as will be described in detail below.

Again with reference to the embodiment of Figure 1, the detection device 400 is coupled to the machining unit 200 so as to be movable simultaneously with the machining unit 200.

The machine "M" further comprises a control unit 500 configured to receive and process the information so as to associate this information with at least one identifying property, among a plurality of identifying properties pre-stored in the control unit 500, corresponding to the at least one hold-down device 300 coupled to the work table 100.

Preferably, the control unit 500 processes the information so as to associate the information with a group of identifying properties, among a plurality of groups of identifying properties pre-stored in the control unit 500, corresponding to the at least one hold-down device 300 coupled to the work table 100.

In other words, by processing the information detected by the detection device 400, the control unit 500 is able to identify (that is, determine the identifying properties of) the hold-down device 300 coupled to the work table 100.

Preferably, the identifying properties comprise at least one quality property and/or at least one dimensional property and/or at least one property which identifies an orientation in space of the at least one hold-down device 300 and/or at least one property which identifies spatial position and/or a property which identifies an operating configuration of the at least one hold-down device 300.

Thus, in use, at least one hold-down device 300 is associated with the work table 100. In this situation, the detection device 400, for example after being moved close to the hold-down device 300 by the machining unit 200, detects the information relative to the hold-down device 300 and the control unit 500 processes this information to associate it with at least one identifying property pre-stored in the control unit 500 so as to identify the hold-down device 300 associated with the work table 100.

For example, the control unit 500 processes the information detected by hold-down device 300 and associates this information with a quality property of the hold-down device 300, for example the type of the hold-down device 300, in order to identify which type of hold-down device 300 has been coupled to the work table 100.

According to a further example, the control unit 500 processes the information detected by the hold-down device 300 and associates this information with a quality property of the hold-down device 300 so as to identify what type of hold-down device 300 has been coupled to the work table 100 and with a dimensional property of the hold-down device 300 so as to identify the dimensions of the hold-down device 300.

Advantageously, by doing so it is possible to uniquely and precisely identify which hold-down device 300 has been coupled to the work table 100. Advantageously, by doing so it is possible to reliably know the actual set-up of the work table 100.

With reference now to the embodiments of Figures 2A and 2B, the detection device 400 is an optical vision device, and the at least one hold-down device 300 comprises at least one distinctive element "D" representing the information relative to that hold-down device 300 when coupled to the work table 100.

Preferably, the at least one distinctive element "D" is defined by: a coloured element; and/or an element having a predetermined geometrical shape; and/or an element having a predetermined pattern; and/or a QR code.

With reference to the embodiment of Figure 2A, the at least one distinctive element "D" is defined by a portion of at the least one hold-down device 300. In more detail, in this embodiment, the at least one distinctive element "D" is defined by an upper seal of the hold-down device 300 having a predetermined pattern.

In use, therefore, the detection device 400 detects the distinctive element "D", and in particular detects the type of pattern, and sends the information of this detection to the control unit 500 which associates this information relative to the pattern with at least one of the identifying properties pre-stored in the control unit in order to identify the hold-down device 300. If, for example, the pattern shown in Figure. 2A were pre-stored in the control unit 500 as identifying a suction cup, at the time of processing the information detected by the detection device 400, the control unit 500 would be able to determine that a suction cup was mounted on the work table 100.

With reference now to the embodiment of Figure 2B, the hold-down device 300 comprises at least one distinctive element "D" applied to an outside wall 300a of the at least one hold-down device 300 so as to be detectable by the detection device 400.

In the embodiment of Figure 2B, by way of example, the hold-down device 300 comprises two distinctive elements "D" applied to respective outer walls 300a of the at least one hold-down device 300. In this situation, in use, the detection device 400 detects the distinctive elements "D", and in p[articular detects the shape (and/or possibly the colour and/or the pattern) and sends the information regarding this detection to the control unit 500, which associates it with one of the identifying properties pre-stored in the control unit in order to identify the hold-down device 300. If, for example, the triangle shape shown in Figure 2B were pre-stored in the control unit 500 as identifying a suction cup and the circle shape were pre-stored in the control unit 500 as identifying predetermined dimensions, at the time of processing the information detected by the detection device 400, the control unit 500 would be able to determine that a suction cup with predetermined dimensions was mounted on the work table 100.

With reference now to the embodiment of Figure 3, the detection device 400 comprises an RFID reader "R" and the at least one hold-down device 300 comprises at least one tag "T" detectable by the detection device 400.

The "T" tag is associated with an identification code representing the information. In this way, when in use, the detection device 400 reads the identification code stored in the tag "T" and sends the information of that detection to the control unit 500, which associates the identification code with at least one of the identifying properties pre-stored in the control unit 500 in order to identify the hold-down device 300. If, for example, the identification code were pre-stored in the control unit 500 as identifying a suction cup having predetermined dimensions and a predetermined spatial orientation, at the time of processing the information detected by the detection device 400, the control unit 500 would be able to determine that a suction cup with certain dimensions and with a certain spatial orientation was mounted on the work table 100.

With reference to the embodiments shown in Figures 3, the work table 100 extends along the longitudinal axis "X" and comprises a plurality of bars 101 extending along an axis "Y" transversal to the longitudinal axis "X". In this embodiment, the machine "M" comprises, for each bar 101, at least one carriage 102 slidable along the respective bar 101. The detection device 400 may be selectively connectable to one of the carriages 102 so as to be movable simultaneously with the carriage 102 towards the at least one hold-down device 300to read the tag "T".

Again with reference to Figure 3, it should be noted that the carriage 102, on which the detection device 400 is located, is moved close to the at least one hold-down device 300 associated with the bar 101 so that the RFID reader "R" may read the tag "T" and detect the information contained therein.

Preferably, the carriage 102 is configured to engage the at least one hold-down device 300 and to move the at least one hold-down device 300 along the respective bar 101.

In other words, the hold-down device 300 is mounted on the carriage102 having the detection device 400 so that the latter may carry out the detection. After the detection or simultaneously with it, the carriage 102 (and thus the hold-down device 300 mounted on it) is slid along the respective bar 101 so as to place the hold-down device 300 in a predetermined position along the bar 101 itself. Once the hold-down device 300 is positioned, the carriage 102 is uncoupled from the hold-down device 300.

With reference now, on the other hand, to an embodiment not illustrated in the accompanying drawings, the detection device 400 is a visual capturing device configured to capture an image. The image represents the information detected relative to at least one hold-down device 300 when coupled to the work table 100. The control unit 500 is configured to process the image using an artificial intelligence (AI) engine. The Al engine is trained to associate information relative to a hold-down device with identifying properties, so as to associate the information with at least one identifying property, among a plurality of identifying properties pre-stored in the control unit 500, corresponding to the at least one hold-down device 300 coupled to said work table 100.

In other words, during the training, a large number of images representing different set-ups of hold-down devices on a work table are detected. The images are processed and tagged. During the training, the predictions carried out by the Al engine regarding the recognition of the set-up of the work table are compared with the actual tags and the errors are corrected. The present invention also relates to a method for configuring a machine "M" for machining a part, in particular a wooden part or the like. Preferably, but without limiting the scope of the invention, the method is carried out by means of a machine "M" as described above.

The method comprises a step of coupling at least one hold-down device 300, configured to support and hold in place the part on a work table 100 of the machine "M".

The method further comprises a step of detecting, by means of a detection device 400, information relative to the at least one hold-down device 300 when coupled to the work table 100 and a step of sending, by means of the detection device 400, the information to a control unit 500 of the machine "M".

The method further comprises a step of processing, by means of the control unit 500, the information so as to associate the information with at least one identifying property, among a plurality of identifying properties pre-stored in the control unit 500, corresponding to the at least one hold-down device 300 coupled to the work table 100.

According to a possible embodiment of the method, the detection device 400 is coupled to the machining unit 200 so as to be movable simultaneously with the machining unit 200. In this situation, the method comprises, prior to the step of detecting, a step of moving the machining unit 200 so as to move the detection device 400 closer to the at least one hold-down device 300 coupled to the work table 100.

According to a further embodiment, the detection device 400 is an RFID reader "R" and the at least one hold-down device 300 comprises a tag "T" detectable by the detection device 400. The tag "T" is associated with an identification code representing the information detected by the detection device 400. In this situation, the step of detecting is accomplished by reading the tag "T".

According to a further embodiment, the detection device 400 is a visual capturing device. In this situation, the step of detecting is accomplished by capturing an image representing the information relative to the at least one hold-down device 300 when coupled to the work table 100. In this situation, the step of processing is accomplished by processing the image via an artificial intelligence (AI) engine.

Preferably, the method comprises a step of training the artificial intelligence engine to associate information relative to a hold-down device with identifying properties of the hold-down device.

The invention achieves the preset aims eliminating the drawbacks of the prior art.

In particular, the present invention reliably and accurately enables the determination of the correct set-up of the work surface.

## Claims

1. A machine (M) for machining a part, in particular a wooden part or the like, comprising:
- a work table (100);
- a machining unit (200), movable relative to said work table (100) and configured to perform at least one machining process on said part;
- at least one hold-down device (300), configured to be coupled to, and uncoupled from, said work table (100) and to support and hold said part in place;
- a detection device (400), configured to detect information relating to said at least one hold-down device (300) when coupled to said work table (100) and to send said information to a control unit (500);
- a control unit (500), configured to receive and process said information so as to associate said information with at least one identifying property of a plurality of identifying properties pre-stored in the control unit (500), corresponding to the at least one hold-down device (300) coupled to said work table (100).

2. The machine (M) according to claim 1, wherein said identifying properties comprise at least one quality property and/or at least one dimensional property and/or at least one property which identifies an orientation of said hold-down device (300) in space and/or at least one property which identifies spatial position and/or at least one property which identifies an operating configuration.

3. The machine (M) according to claim 1 or 2, wherein said detection device (400) is a contactless detector, preferably said detection device (400) being an optical vision device.

4. The machine (M) according to claim 3, wherein said at least one hold-down device (300) comprises at least one distinctive element (D) representing said information relating to said at least one hold-down device (300) when coupled to said work table (100), said at least one distinctive element (D) being applied to an outside wall (300a) of said at least one hold-down device (300) so as to be detectable by said detection device (400).

5. The machine (M) according to claim 3, wherein said at least one hold-down device (300) comprises at least one distinctive element (D) representing said information relating to said at least one hold-down device (300) when coupled to said work table (100), and wherein said at least one distinctive element (D) is defined by a portion of said at least one hold-down device (300).

6. The machine (M) according to claim 4 or 5, wherein said at least one distinctive element (D) is defined by:
- a coloured element; and/or
- an element having a predetermined geometrical shape; and/or
- an element having a predetermined pattern; and/or
- a QR code.

7. The machine (M) according to any one of the preceding claims, wherein said detection device (400) is coupled to said machining unit (200) so as to be movable simultaneously with said machining unit (200).

8. The machine (M) according to claim 1 or 2, wherein said detection device (400) comprises an RFID reader (R), and wherein said at least one hold-down device (300) comprises at least one tag (T) detectable by said detection device (400), said tag (T) being associated with an identification code representing said information relating to said at least one hold-down device (300) when coupled to said work table (100).

9. The machine (M) according to claim 8, wherein said work table (100) extends along a longitudinal axis (X) and comprises a plurality of bars (101) extending along an axis (Y) transverse to the longitudinal axis (X), said machine (M) comprising, for each bar (101), at least one carriage (102) slidable along the respective bar (101), said detection device (400) being selectively connectable to one of said carriages (102) so as to be movable simultaneously with said carriage (102) towards said at least one hold-down device (300) to read said tag (T).

10. The machine (M) according to claim 9, wherein said carriage (102) is configured to engage said at least one hold-down device (300) and to move said at least one hold-down device (300) along the respective bar (101).

11. The machine (M) according to claim 1 or 2, wherein said detection device (400) is a visual capturing device configured to capture an image, said image representing said information relating to said at least one hold-down device (300) when coupled to said work table (100), said control unit (500) being configured to process said image via an artificial intelligence (AI) engine, said Al engine being trained to associate information relating to a hold-down device with identifying properties, so as to associate said information with at least one identifying property of a plurality of identifying properties pre-stored in the control unit (500), corresponding to the at least one hold-down device (300) coupled to said work table (100).

12. A method for configuring a machine (M) for machining a part, in particular a wooden part or the like, in particular a machine (M) according to one or more of the preceding claims, comprising the following steps:
- coupling at least one hold-down device (300) to a work table (100) of the machine (M), the at least one hold-down device (300) being configured to support and hold the part in place;
- via a detection device (400), detecting information relating to said at least one hold-down device (300) when coupled to said work table (100);
- via said detection device (400), sending said information to a control unit (500) of the machine (M);
- via said control unit (500), processing said information so as to associate said information with at least one identifying property of a plurality of identifying properties pre-stored in the control unit (500), corresponding to the at least one hold-down device (300) coupled to said work table (100).

13. The method according to claim 12, wherein said detection device (400) is coupled to said machining unit (200) so as to be movable simultaneously with said machining unit (200), the method comprising, before the step of detecting, a step of moving said machining unit (200) so as to move the detection device (400) towards the at least one hold-down device (300) coupled to the work table (100).

14. The method according to claim 12, wherein said detection device (400) is an RFID reader (R), and wherein said at least one hold-down device (300) comprises a tag (T) detectable by said detection device (400), said tag (T) being associated with an identification code representing said information relating to said at least one hold-down device (300) when coupled to said work table (100), and wherein said step of detecting is accomplished by reading said tag (T).

15. The method according to claim 12, wherein said detection device (400) is a visual capturing device, and wherein said step of detecting is accomplished by capturing an image, said image representing said information relating to said at least one hold-down device (300) when coupled to said work table (100), and wherein the step of processing is accomplished by processing said image via an artificial intelligence (AI) engine.
